# EUROPÄISCHE PATENTANMELDUNG

(11) **EP 2 722 664 A1**
(43) Veröffentlichungstag der Anmeldung: **23.04.2014**
(21) Anmeldenummer: 12189338.2
(22) Anmeldetag: 19.10.2012
(51) Int. Cl.: G01N 21/47, G01N 21/84

(54) **Verfahren und Anordnung zur quantitativen Bestimmung von Inhomogenitäten in einer Fluidschicht**

(71) Anmelder: Sika Technology AG, 6340 Baar (CH)
(72) Erfinder: Birkhofer, Beat, 8006 Zürich (CH); De Sio, Christian, 5340 Wettingen (CH); Fischer, Christian, 8700 Küsnacht (CH)
(74) Vertreter: Sika Patent Attorneys

(57) **Zusammenfassung**

Verfahren zur quantitativen Bestimmung von Inhomogenitäten an der Oberfläche einer Fluidschicht, insbesondere einem Aufstrich einer Flüssigkeit oder Paste, auf einer ebenen Fläche, mit den Schritten: Ausbreiten des Fluids auf der Fläche zur Bildung der Fluidschicht, diffuse Beleuchtung der Fluidschicht mit vorbestimmten Beleuchtungsparametern, insbesondere in einem vorbestimmten Wellenlängenbereich und mit vorbestimmter Beleuchtungsstärke, elektronische Aufnahme und Speicherung mindestens eines Bildes der Oberfläche der diffus beleuchteten Fluidschicht, computergestützte Vorverarbeitung des oder jedes Bildes, unter Einschluss der Erzeugung mindestens einer Ableitung der Intensitätsverteilung nach den Ortskoordinaten, zur Gewinnung eines mehrdimensionalen oder mehrteiligen Vorverarbeitungs-Ergebnisses, und Vergleichs-Verarbeitung, insbesondere unter Einschluss einer Schwellwertdiskriminierung, des Vorverarbeitungs-Ergebnisses zur Gewinnung eines quantitativen Bestimmungsergebnisses.

## Beschreibung

### Technisches Gebiet

Die Erfindung betrifft ein Verfahren zur quantitativen Bestimmung von Inhomogenitäten in einer Fluidschicht, insbesondere einem (ggfs. bereits getrockneten) Aufstrich einer Flüssigkeit oder Paste, auf einer ebenen Fläche. Sie betrifft des Weiteren eine Anordnung zur Durchführung eines solchen Verfahrens.

### Stand der Technik

Die Homogenität (Teil des sogenannten Aspekts) ist ein wichtiger QualitätsParameter für alle Dicht- und Klebstoffe, die für Sichtfugen verwendet werden. Für die Beurteilung wird eine frisch ausgepresste Klebstoff-Raupe mit einem speziellen Spachtel auf Papier ausgestrichen, und dann werden die Inhomogenitäten, sog. Stippen, manuell nach Größenklassen ausgezählt, was zu kaum reproduzierbaren Ergebnissen führt. Um die Proben in einem Flachbettscanner einzulesen, müssen diese erst aushärten, was mehrere Stunden dauern kann. Zudem sind in einem herkömmlichen Scan relevante Inhomogenitäten nur unzureichend zu identifizieren.

Der Erfindung liegt daher die Aufgabe zugrunde, ein insbesondere hinsichtlich der Reproduzierbarkeit, aber auch des Arbeitsaufwandes und der praktischen Anwendbarkeit verbessertes Verfahren sowie eine Anordnung zur Durchführung dieses Verfahrens bereitzustellen.

### Darstellung der Erfindung

Diese Aufgabe wird in ihrem Verfahrensaspekt durch ein Verfahren mit den Merkmalen des Anspruchs 1 und in ihrem Vorrichtungsaspekt durch eine Anordnung mit den Merkmalen des Anspruchs 12 gelöst. Zweckmäßige Fortbildungen des Erfindungsgedankens sind Gegenstand der jeweiligen abhängigen Ansprüche.

Die Erfindung schließt die Überlegung einer diffusen Beleuchtung der Fluidschicht mit vorbestimmten Beleuchtungsparametern, insbesondere in einem vorbestimmten Wellenlängenbereich und mit vorbestimmter Beleuchtungsstärke, ein. Diese kontrollierte diffuse Beleuchtung schafft die Voraussetzungen für die Gewinnung reproduzierbarer Ergebnisse aus einem elektronisch aufgenommenen Bild der Fluidschicht in einer computerisierten Bildverarbeitung, und zwar weitgehend unabhängig von der Farbe und Konsistenz der Fluidschicht.

Des Weiteren schließt die Erfindung den Gedanken ein, die Bildverarbeitung in eine computergestützte Vorverarbeitung des oder jedes Bildes, unter Einschluss der Erzeugung mindestens einer Ableitung der Intensitätsverteilung nach den Ortskoordinaten, zur Gewinnung eines mehrdimensionalen oder mehrteiligen Vorverarbeitungs-Ergebnisses, und eine Vergleichs-Verarbeitung, insbesondere unter Einschluss einer Schwellwertdiskriminierung, des Vorverarbeitungs-Ergebnisses zur Gewinnung eines quantitativen Bestimmungsergebnisses zu untergliedern. Hierbei werden mittels der Vorverarbeitung Inhomogenitäten der Fluidschicht auf exakt vorbestimmte Weise gewissermaßen markiert, und die markierten Bildelemente bilden dann die Grundlage der auf das reproduzierbare quantitative Bestimmungsergebnis ausgerichteten Vergleichs-Verarbeitung.

Bei wichtigen Anwendungen des vorgeschlagenen Verfahrens handelt es sich bei dem Fluid um einen pastösen Kleb-, Dicht- oder Anstrichstoff. Speziell hier ist in einer zweckmäßigen Ausführung vorgesehen, dass der Schritt des Ausbreitens des Fluids mittels eines Spachtels oder einer Rakel, insbesondere mit scharfer Vorderkante, ausgeführt wird. Der Aufstrich kann bei der Messung bereits getrocknet sein. Grundsätzlich kann die Erfindung aber auch bei schüttfähigen Produkten angewandt werden, etwa um körnige Verunreinigungen zu bestimmen, und hier kann neben einem Spachtel oder einer Rakel zum Ausbreiten des Gutes auch andere Mittel eingesetzt werden, etwa ein Rütteltisch. Weiterhin ist die Erfindung auch anwendbar bei eher niedrig viskosen Materialien, etwa sog. Primern, bei denen ein Aufstrich typischerweise mittels eines Pinsels erzeugt wird.

In einer Ausgestaltung ist vorgesehen, dass der Schritt des Ausbreitens des Fluids mittels des Spachtels oder der Rakel unter einem vorbestimmten Winkel zwischen der ebenen Fläche und der Wirkfläche des Spachtels oder der Rakel ausgeführt wird. Zweckmäßig kann auch die Einstellung einer vorbestimmten Geschwindigkeit des Vorschubs des Spachtels oder der Rakel sein. Dies ist insbesondere dann gewährleistet, wenn der Schritt des Ausbreitens des Fluids mit einem Aufstreichgerät mit vorbestimmter Andruckkraft und Geschwindigkeit ausgeführt wird. Eine entsprechende Handlungsanweisung und etwas Geschick vorausgesetzt, kann diese Bedingung aber auch bei manueller Ausführung des Aufstreich-Schrittes erfüllt werden.

In einer weiteren Ausführung der Erfindung ist vorgesehen, dass der Schritt des Ausbreitens des Fluids auf einem vorbestimmten, markierten Bereich einer Unterlage mit vorbestimmten Oberflächeneigenschaften, insbesondere auf einem Blatt Normalpapier mit definierter Körnigkeit, ausgeführt wird. Bei Materialien mit relativ niedriger Viskosität, etwa den oben erwähnten Primern, kann die Anwendung einer feuchtigkeitsundurchlässigen Unterlage, etwa einer Glassplatte, zweckmäßig sein.

In einer weiteren Ausführung werden zur Gewinnung eines Bestimmungsergebnisses mehrere, insbesondere vier, Bilder aufgenommen, gespeichert und vor-verarbeitet, wobei bei der Aufnahme unterschiedliche Beleuchtungsrichtungen der diffusen Beleuchtung eingestellt werden und wobei die Vorverarbeitung die Gewinnung von Krümmungs-, Textur- und Höhenprofilinformation umfasst.

In einer weiteren Ausgestaltung umfassen die Schritte der diffusen Beleuchtung und elektronischen Bildaufnahme mehrere Teilschritte der diffusen Beleuchtung und Aufnahme jeweils eines Bildes bei unterschiedlichen Wellenlängen oder in unterschiedlichen Wellenlängenbereichen, und jedes der aufgenommenen Bilder wird mindestens einer separaten Vorverarbeitung, optional auch einer separaten Vergleichs-Verarbeitung, unterzogen.

Beide letztgenannte Ausführungen dienen dazu, für die Vergleichs-Verarbeitung hinreichend umfangreiche Daten zum optischen Erscheinungsbild der Fluidschicht (speziell des Aufstriches) zur Verfügung zu haben und sie ermöglichen insoweit insbesondere eine Auswertung unter verschiedenen Kriterien und erforderlichenfalls auch eine hinreichende Fehlerkorrektur.

Gemäß einer weiteren Ausführung umfasst die Vorverarbeitung die Berechnung eines Höhen- oder (lokalen) Krümmungsprofils der Fluidschicht und die Vergleichs-Verarbeitung eine Schwellwertdiskriminierung des berechneten Höhen- oder Krümmungsprofils mit einem von Inhomogenitäten freien Höhen- oder Krümmungsprofils sowie einen am Ergebnis der Schwellwertdiskriminierung vorgenommenen Zählschritt und/oder geometrischen Vermessungsschritt. Hierdurch lassen sich die Anzahl bzw. (auf die Fläche des Aufstrichs bezogen) Dichte von Inhomogenitäten oder deren Größe und, jedenfalls bis zu einem gewissen Grade, geometrische Gestalt ermitteln und - in bevorzugter Kombination beider Vorgehensweisen - auch Größenverteilungen ermitteln. Hierzu schließt sich, gemäß einer weiteren Ausführung der Erfindung, an den Schritt der Vergleichs-Verarbeitung ein statistischer Auswertungsschritt, insbesondere zur Bestimmung einer Inhomogenitätsgrößenverteilung, an.

In einer weiteren Ausführung der Erfindung ist vorgesehen, dass die optionale Schwellwertdiskriminierung aufgrund von aus einem vorliegenden Vorverarbeitungs-Ergebnis errechneten Schwellwerten ausgeführt wird. Hierdurch lässt sich insbesondere unterschiedlichen Färbungen der Fluidschicht und ggfs. auch externen Einflüssen während des Messvorganges, etwa einem unkontrollierten zusätzlichen Lichteinfall, Rechnung tragen.

Vorrichtungsaspekte von Ausführungen der Erfindung ergeben sich weitgehend analog zu den oben erwähnten Verfahrensaspekten und bedürfen insoweit keiner Wiederholung. Es sei jedoch darauf hingewiesen, dass in einer zweckmäßigen Ausführung der Anordnung die Beleuchtungseinrichtung eine Mehrzahl von LEDs als Leuchtmittel und einen Diffusor umfasst, wobei der Diffusor insbesondere eine Halbkugel oder Glocke mit diffus reflektierender Innenoberfläche aufweist und LEDs oder Gruppen von LEDs separat schaltbar in verschiedenen Positionen bezüglich der Halbkugel oder Glocke angeordnet sind.

In einer weiteren Ausführung ist in der Bildverarbeitungseinrichtung ein Vorverarbeitungs-Algorithmus zur Gewinnung eines Bestimmungsergebnisses aus mehreren, insbesondere vier, Bildern, welcher zur Gewinnung von Krümmungs-, Textur- und Höhenprofilinformation ausgebildet, und/oder ein Vergleichs-Verarbeitungsalgorithmus gespeichert, welcher zur Schwellwertdiskriminierung des berechneten Höhen- oder Krümmungprofils mit einem von Inhomogenitäten freien Höhen- oder Krümmungsprofil geschaffen ist. Des Weiteren können Softwareelemente zur Ausführung eines am Ergebnis der Schwellwertdiskriminierung vorgenommenen Zählschrittes und/oder geometrischen Vermessungsschrittes und Prozessormittel zur Ausführung des oder jedes gespeicherten Algorithmus vorgesehen sein.

### Kurze Beschreibung der Zeichnung

Im Folgenden werden anhand der Figuren wesentliche Aspekte der Ausführungsbeispiele der Erfindung erläutert.

Es zeigen:
- Fig. 1: eine skizzenartige Darstellung des Aufstreichens einer pastösen Dichtmasse mittels einer Rakel und eines motorbetriebenen Aufstreichgerätes und
- Fig. 2: eine skizzenartige Darstellung einer Anordnung zur Bildaufnahme und -auswertung eines gemäß Fig. 1 erzeugten Aufstriches, als Funktions-Blockschaltbild.

### Weg zur Ausführung der Erfindung

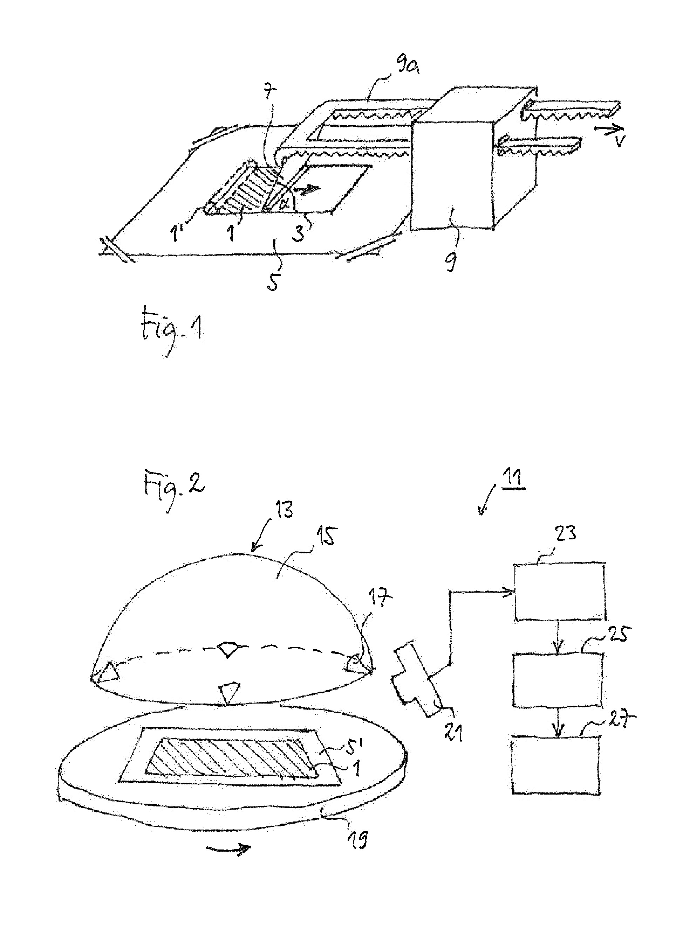

Fig. 1 zeigt, wie aus einem Strang 1 eines pastösen Dichtstoffes, der an einer Kante eines abgrenzten Aufstrichfeldes 3 auf einem Blatt Papier 5 abgesetzt wurde, mittels einer Rakel 7 ein Dichtstoff-Aufstrich 1 gebildet wird. Die Rakel 7 ist hierbei unter einem exakt vorbestimmten Winkel α zum Aufstrichpapier 5 in einem Haltearm 9a eines Aufstreichgerätes 9 gehaltert und wird durch dieses mit ebenfalls exakt vorbestimmter Geschwindigkeit v über die Papieroberfläche geführt. Hierdurch entsteht ein Aufstrich mit exakt reproduzierbaren Eigenschaften, insbesondere präzise vorbestimmter Dicke und Oberflächentextur.

Fig. 2 zeigt schematisch in Art eines Funktions-Blockschaltbildes eine Beleuchtungs- und Bildaufnahmeanordnung 11 zur Beleuchtung des Aufstriches 1 auf dem Aufstrichpapier 5 und zur Aufnahme mehrerer Bilder hiervon aus verschiedenen Richtungen sowie zur Verarbeitung der aufgenommen Bilder. Die Beleuchtungskomponente 13 der Anordnung 11 umfasst hier eine Diffusor-Halbkugel 15 und vier LED 17, die nahe dem Umfang der Halbkugel 15 so angeordnet sind, dass sie in diese hinein strahlen. Der Aufstrich 1 auf einem Ausschnitt 5' des Aufstrichpapiers ist hier auf einen xy-Koordinatentisch 19 aufgeklemmt und auf diesem unterhalb der Diffusor-Halbkugel 15 drehbar angeordnet.

Eine Digitalkamera 21 ist hier außerhalb des Umfangsrandes der Halbkugel 15 so angeordnet, dass ihre Blickrichtung auf den Aufstrich 1 gerichtet ist, welcher unterhalb des Gipfelpunktes der Halbkugel platziert und dadurch gleichmäßig diffus ausgeleuchtet ist. Sie kann aber auch im rechten Winkel zur Probe ausgerichtet und z. B. innerhalb der Halbkugel platziert sein. Mit der Digitalkamera 21 werden, in der Anfangs-Orientierung des Aufstrichs 1 sowie jeweils nach 90° Drehung, insgesamt vier Aufnahmen vom Aufstrich 1 angefertigt und gespeichert. Die gespeicherten Aufnahmen werden in einer Vorverarbeitungseinheit 23 einer Bild-Vorverarbeitung der oben erläuterten Art unterzogen, und das Vorverarbeitungs-Ergebnis wird einer Vergleichs-Verarbeitungseinheit 25 zugeführt, wo eine ebenfalls weiter oben erläuterte Vergleichsverarbeitung ausgeführt wird.

Beispielsweise kann die Vorverarbeitung zumindest eine Bildung der zweiten Ableitung des Digitalbildes nach den Ortskoordinaten zur Bestimmung einer lokalen Krümmung in den einzelnen Bildpunkten umfassen, und die Vergleichs-Verarbeitung kann eine flächenbezogene Zählung und Größen-Klassifizierung von über der Bildung der zweiten Ableitung ermittelten Inhomogenitäten ("Grit") des Aufstrichs umfassen. Der Vergleichs-Verarbeitungseinheit 25 ist eine statistische Verarbeitungseinheit 27 nachgeordnet, in der auf dem Vergleichs-Verarbeitungsergebnis aufbauende statistische Auswertungen ausgeführt werden können, beispielsweise die Bestimmung einer Größendichteverteilung von Inhomogenitäten des Aufstrichs, oder auch der Inhomogenitäts-/Partikel-Anzahl in vorbestimmten Größenklassen.

Die Ausführung der Erfindung ist nicht auf diese Beispiele beschränkt, sondern ebenso in einer Vielzahl von Abwandlungen möglich, die im Rahmen fachgemäßen Handelns liegen. So kann insbesondere die Erzeugung des Aufstrichs manuell und ggfs. auch von andersartigen Mitteln zur Erzeugung der zu untersuchenden Fluidschicht ausgeführt werden. Die Anzahl und Bedingungen der aufgenommen Bilder können variieren; so kann insbesondere auch mit einem einzigen Bild oder jedenfalls weniger als vier Bildern sinnvoll gearbeitet werden, wenn die Anforderungen an die Messfehler und die Aussagekraft des quantitativen Bestimmungsergebnisses hinreichend begrenzt sind. Modifikationen sind des Weiteren hinsichtlich der Art und Weise der Vorverarbeitung und Vergleichs-Verarbeitung wie auch der statistischen Auswertung möglich und liegen im Bereich fachmännischen Handelns.

## Patentansprüche

1. Verfahren zur quantitativen Bestimmung von Inhomogenitäten an der Oberfläche einer Fluidschicht, insbesondere einem Aufstrich einer Flüssigkeit oder Paste, auf einer ebenen Fläche, mit den Schritten:
Ausbreiten des Fluids auf der Fläche zur Bildung der Fluidschicht, diffuse Beleuchtung der Fluidschicht mit vorbestimmten Beleuchtungsparametern, insbesondere in einem vorbestimmten Wellenlängenbereich und mit vorbestimmter Beleuchtungsstärke, elektronische Aufnahme und Speicherung mindestens eines Bildes der Oberfläche der diffus beleuchteten Fluidschicht, computergestützte Vorverarbeitung des oder jedes Bildes, unter Einschluss der Erzeugung mindestens einer Ableitung der Intensitätsverteilung nach den Ortskoordinaten, zur Gewinnung eines mehrdimensionalen oder mehrteiligen Vorverarbeitungs-Ergebnisses, und
Vergleichs-Verarbeitung, insbesondere unter Einschluss einer Schwellwertdiskriminierung, des Vorverarbeitungs-Ergebnisses zur Gewinnung eines quantitativen Bestimmungsergebnisses.

2. Verfahren nach Anspruch 1, wobei es sich bei dem Fluid um einen pastösen Kleb-, Dicht- oder Anstrichstoff handelt und die Fluidschicht optional getrocknet ist.

3. Verfahren nach Anspruch 1 oder 2, wobei der Schritt des Ausbreitens des Fluids mittels eines Spachtels oder einer Rakel, insbesondere mit scharfer Vorderkante, ausgeführt wird.

4. Verfahren nach Anspruch 3, wobei der Schritt des Ausbreitens des Fluids mittels des Spachtels oder der Rakel unter einem vorbestimmten Winkel zwischen der ebenen Fläche und der Wirkfläche des Spachtels oder der Rakel ausgeführt wird.

5. Verfahren nach einem der vorangehenden Ansprüche, wobei der Schritt des Ausbreitens des Fluids mit einem Aufstreichgerät mit vorbestimmter Andruckkraft und Geschwindigkeit ausgeführt wird.

6. Verfahren nach einem der vorangehenden Ansprüche, wobei der Schritt des Ausbreitens des Fluids auf einem vorbestimmten, markierten Bereich einer Unterlage mit vorbestimmten Oberflächeneigenschaften, insbesondere auf einem Blatt Normalpapier, ausgeführt wird.

7. Verfahren nach einem der vorangehenden Ansprüche, wobei zur Gewinnung eines Bestimmungsergebnisses mehrere, insbesondere vier, Bilder aufgenommen, gespeichert und vor-verarbeitet werden, wobei bei der Aufnahme unterschiedliche Beleuchtungsrichtungen der diffusen Beleuchtung eingestellt werden und wobei die Vorverarbeitung die Gewinnung von Krümmungs-, Textur- und Höhenprofilinformation umfasst.

8. Verfahren nach einem der vorangehenden Ansprüche, wobei die Schritte der diffusen Beleuchtung und elektronischen Bildaufnahme mehrere Teilschritte der diffusen Beleuchtung und Aufnahme jeweils eines Bildes bei unterschiedlichen Wellenlängen oder in unterschiedlichen Wellenlängenbereichen umfassen und jedes der aufgenommenen Bilder mindestens einer separaten Vorverarbeitung, optional auch einer separaten Vergleichs-Verarbeitung, unterzogen wird.

9. Verfahren nach einem der vorangehenden Ansprüche, wobei die Vorverarbeitung die Berechnung eines Höhen- oder Krümmungsprofils der Fluidschicht und die Vergleichs-Verarbeitung eine Schwellwertdiskriminierung des berechneten Höhen- oder Krümmungsprofils mit einem von Inhomogenitäten freien Höhen- oder Krümmungsprofils sowie einen am Ergebnis der Schwellwertdiskriminierung vorgenommenen Zählschritt und/oder geometrischen Vermessungsschritt umfasst.

10. Verfahren nach einem der vorangehenden Ansprüche, wobei sich an den Schritt der Vergleichs-Verarbeitung ein statistischer Auswertungsschritt, insbesondere zur Bestimmung einer Inhomogenitätsgrößenverteilung, anschließt.

11. Verfahren nach einem der vorangehenden Ansprüche, wobei die optionale Schwellwertdiskriminierung aufgrund von aus einem vorliegenden Vorverarbeitungs-Ergebnis errechneten Schwellwerten ausgeführt wird.

12. Anordnung zur Durchführung des Verfahrens nach einem der vorangehenden Ansprüche, mit
Mitteln zur Erzeugung der Fluidschicht auf vorbestimmte und reproduzierbare Weise,
einer Beleuchtungseinrichtung zur Bereitstellung der diffusen Beleuchtung mit definierten Beleuchtungsparametern,
einer Bildaufnahmeeinrichtung und
einer Bildverarbeitungseinrichtung zur Ausführung der Vorverarbeitung der Bilder der Bildaufnahmeeinrichtung und der Vergleichs-Verarbeitung des Vorverarbeitungsergebnisses.

13. Anordnung nach Anspruch 12, wobei die Mittel zur Erzeugung der Fluidschicht einen Spachtel oder eine Rakel, insbesondere mit scharfer Vorderkante, zur Erzeugung eines gleichmäßigen Aufstrichs einer Flüssigkeit oder Paste als Fluidschicht und insbesondere auch ein Aufstreichgerät umfassen, welches zur Erzeugung des Aufstrichs mit vorbestimmter Andruckkraft und Geschwindigkeit ausgebildet ist.

14. Anordnung nach Anspruch 12 oder 13, wobei die Beleuchtungseinrichtung eine Mehrzahl von LEDs als Leuchtmittel und einen Diffusor umfasst, wobei der Diffusor insbesondere eine Halbkugel oder Glocke mit diffus reflektierender Innenoberfläche aufweist und LEDs oder Gruppen von LEDs separat schaltbar in verschiedenen Positionen bezüglich der Halbkugel oder Glocke angeordnet sind.

15. Anordnung nach einem der Ansprüche 12 - 14, wobei in der Bildverarbeitungseinrichtung ein Vorverarbeitungs-Algorithmus zur Gewinnung eines Bestimmungsergebnisses aus mehreren, insbesondere vier, Bildern gespeichert ist, welcher zur Gewinnung von Krümmungs-, Textur- und Höhenprofilinformation ausgebildet ist, und/oder ein Vergleichs-Verarbeitungsalgorithmus gespeichert ist, welcher zur Schwellwertdiskriminierung des berechneten Höhen- oder Krümmungsprofils mit einem von Inhomogenitäten freien Höhen- oder Krümmungsprofil ausgebildet ist und einen am Ergebnis der Schwellwertdiskriminierung vorgenommenen Zählschritt und/oder geometrischen Vermessungsschritt umfasst und Prozessormittel zur Ausführung des oder jedes gespeicherten Algorithmus vorgesehen sind.
